# EUROPEAN PATENT SPECIFICATION

(11) **EP 3 163 404 B1**
(45) Date of publication and mention of the grant of the patent: **09.06.2021**
(21) Application number: 16158313.3
(22) Date of filing: 02.03.2016
(51) Int. Cl.: G06F 3/01, G06F 3/038, G06F 3/041, G06F 3/0488, G06F 3/0346

(54) **METHOD AND DEVICE FOR PREVENTING ACCIDENTAL TOUCH OF TERMINAL WITH TOUCH SCREEN**
VERFAHREN UND VORRICHTUNG GEGEN UNGEWÜNSCHTE BERÜHRUNG EINES ENDGERÄTS MIT BERÜHRUNGSBILDSCHIRM
PROCÉDÉ ET DISPOSITIF DE PRÉVENTION DE TOUCHER ACCIDENTEL D'UN TERMINAL À ÉCRAN TACTILE

(30) Priority: 30.10.2015 CN 201510729725
(43) Date of publication of application: 03.05.2017
(73) Proprietor: Xiaomi Inc., Beijing 100085 (CN)
(72) Inventor: YANG, Kun, Haidian District, Beijing 100085 (CN); PAN, Shuangquan, Haidian District, Beijing 100085 (CN); TAO, Jun, Haidian District, Beijing 100085 (CN)
(74) Representative: Sadler, Peter Frederick

(56) References cited:
- US-A1- 2010 201 615
- US-A1- 2012 154 294
- US-A1- 2012 235 925

## Description

### TECHNICAL FIELD

The present disclosure generally relates to the field of terminals, and more particularly, to a method and device for preventing an accidental touch of a terminal with a touch screen.

### BACKGROUND

At present, many terminals, particularly intelligent terminals, are provided with touch screens. A user may complete operations through various touch operations on a touch screen, for example, an application may be started by a click operation on the touch screen. This brings great convenience to a user. However, it may lead to accidental operations, causing the user unnecessary problems.

US patent application US2012/0235925 A1 describes an electronic device with a touch sensitive surface and a device motion sensor that detects a predefined gesture on the touch sensitive surface. The predefined gesture has one or more gesture components. The device detects a predefined movement of the electronic device with the device motion sensor. The predefined movement has one or more movement components. In response to detecting the predefined gesture and the predefined movement, the device determines whether the one or more gesture components and the one or more movement components satisfy predefined concurrency criteria, and if so performs a predefined operation that is associated with concurrent detection of the predefined gesture and the predefined movement, and otherwise foregoes performing the predefined operation. US patent application US2012/0154294 A1 describes a computing device that collects input events from a touch screen type input mechanism and at least one movement type input mechanism (e.g. an accelerometer and/or gyro device). The movement type mechanism can identify the orientation of the computing device and/or the dynamic motion of the computing device. The computing device uses these input events to interpret the type of input action that has occurred, e.g. to assess when at least part of the input action is unintentional, and can then perform behavior based on its interpretation, such as ignoring part of the input event. Specifically, a first input interpretation module can analyze the touch input events, a second input interpretation module can analyze the movement input events, and a final interpretation module can then use the conclusions of the second interpretation module to modify the conclusions of the first interpretation module. US patent application US2010/0201615 A1 describes a touch and motion sensitive input control configured to use a combination of touch sensor output and motion sensor output to determine if an input event has occurred at an input area. The touch and motion sensitive input control can detect a particular input event when a touch sensor detects a touch at a particular input area at around the same time as a motion sensor detects a change in motion. Based on the amount and nature of the motion detected, this can indicate that a user intended to cause an input event other than one caused by a mere touching of the input area.

### SUMMARY OF THE INVENTION

The present invention relates to a method for preventing an accidental touch of a terminal with a touch screen, in accordance with the appended claim 1. Preferred embodiments of the method are defined in the appended dependent claims. The invention also relates to a device, a computer program and a recording medium as defined respectively in the appended claims 7 to 9.

In the technical solutions provided by the present disclosure, according to a matching relationship pre-established for a touch behavior, wherein the pre-established matching relationship is a relationship between status information of the terminal and motion status information of a touch gesture, it may be determined whether the current status information of the terminal and the current touch gesture correspond to the same touch behavior, and it thus may be determined whether the touch gesture is effective. When the touch gesture is effective, an operation corresponding to the touch behavior will be carried out, thereby ensuring a perfect user experience.

It should be understood that the above general description and detailed description below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for preventing an accidental touch of a terminal with a touch screen, according to an exemplary embodiment.
Fig. 2 is a flow chart showing another method for preventing an accidental touch of a terminal with a touch screen, according to an exemplary embodiment.
Fig. 3 is a flow chart showing a third method for preventing an accidental touch of a terminal with a touch screen, according to an exemplary embodiment.
Fig. 4 is a flow chart showing a fourth method for preventing an accidental touch of a terminal with a touch screen, according to an exemplary embodiment.
Fig. 5 is a block diagram of a device for preventing an accidental touch of a terminal with a touch screen, according to an exemplary embodiment.
Fig. 6 is a block diagram of another device for preventing an accidental touch of a terminal with a touch screen, according to an exemplary embodiment.
Fig. 7 is a block diagram of a third device for preventing an accidental touch of a terminal with a touch screen, according to an exemplary embodiment.
Fig. 8 is a block diagram of a fourth device for preventing an accidental touch of a terminal with a touch screen, according to an exemplary embodiment.
Fig. 9 is a block diagram of a device for preventing an accidental touch of a terminal with a touch screen applicable to a terminal with a touch screen, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

At present, many terminals, particularly intelligent terminals, are provided with touch screens. A user may complete operations through various touch operations on a touch screen, for example, an application may be started by a click operation on the touch screen. This brings great convenience to a user. However, it may lead to accidental operations, causing the user some unnecessary problems.

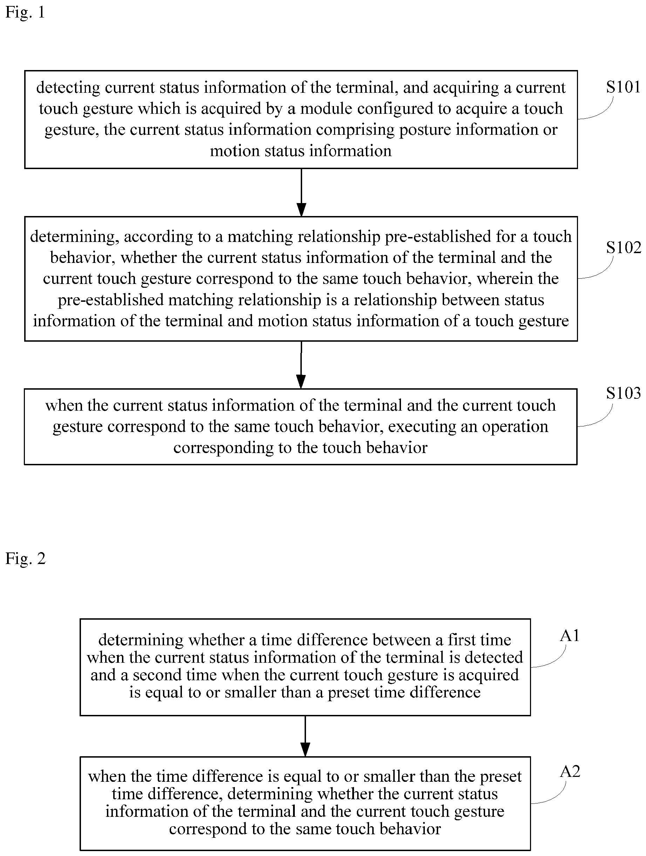

For solving this problem, the present disclosure provides a method for preventing an accidental touch of a terminal with a touch screen. The method is applicable to a terminal with a touch screen, and an execution entity corresponding to the method may be a terminal carried by a user. As shown in Fig. 1, the method includes Steps 101 to 103.

Step 101 includes detecting current status information of the terminal, and acquiring a current touch gesture which is acquired by a module configured to acquire a touch gesture, wherein the current status information of the terminal includes posture information and optionally motion status information of the terminal.

The posture information of the terminal is orientation information which is an inclination angle of the body of the terminal. The posture/orientation information of the terminal may be acquired, for example, by a gyroscope or accelerometer.

The motion status information of the terminal may be displacement information of the terminal, acceleration information of the terminal, or a combination thereof. The module configured to acquire the touch gesture may be a touch screen or touch key which acquires the current touch gesture on the basis of capacitance detection, or a fingerprint module with a touch function.

Step 102 includes determining, according to a matching relationship pre-established for a touch behavior, whether the current status information of the terminal and the current touch gesture correspond to the same touch behavior, wherein the pre-established matching relationship is a relationship between status information of the terminal and motion status information of a touch gesture.

By Step 102, it may be determined whether the current touch gesture is effective, and whether the current touch gesture is an intended touch on the touch screen instead of an accidental touch. Specifically, when the current status information of the terminal and the current touch gesture correspond to the same touch behavior, it indicates that the current touch gesture is effective and the current touch gesture is an intended touch of a user on the touch screen instead of an accidental touch. On the contrary, when the current status information of the terminal and the current touch gesture do not correspond to the same touch behavior, it indicates that the current touch gesture is ineffective and should be an accidental touch, for example, it may be a gesture generated by an accidental touch on the touch screen due to unlocking of the screen when the user carries the terminal.

In addition, since the current status information of the terminal is generated by a touch gesture, a motion change may not be obvious. In order to avoid the phenomenon that the detected current status information of the terminal is not so accurate, a chip is additionally arranged in the terminal, the chip may be triggered by the touch gesture on the touch screen to move, and current status information of the chip may be deemed as the current status information of the terminal. Similarly, a matching relationship, pre-established for a touch behavior, between status information of the terminal and motion status information of a touch gesture may also be a matching relationship, pre-established for the touch behavior, between status information of the chip and motion status information of the touch gesture.

Moreover, the preset chip may be a chip where an acceleration sensor is located, the acceleration sensor may detect the status information of the chip where it is located. The chip is arranged below the touch screen in the terminal, and may move after receiving the touch gesture, thereby generating the current status information.

Step 103 includes, when the current status information of the terminal and the current touch gesture correspond to the same touch behavior, executing an operation corresponding to the touch behavior.

When the detected current status information of the terminal and the current touch gesture do not correspond to the same touch behavior, it may be determined that there is an accidental touch, and a protection operation will be carried out. The determination may also be repeated one or more times to recheck whether there is indeed an accidental touch, and a protection operation will be carried out when there is indeed an accidental touch. The protection operation is locking the touch screen of the terminal, or forbidding starting of a preset program in the terminal within a preset time (for example, forbidding an outbound call, forbidding running of instant messaging software and forbidding running of a shopping application program) or, in embodiments outside the scope of the claimed invention, may be controlling the terminal to enter a low-power-consumption mode, and the protection operation may further prevent the terminal from executing another accidental operation and improve an accidental touch prevention effect.

When the detected current status information of the terminal and the current touch gesture correspond to the same touch behavior, it indicates that the current touch gesture is effective, the probability that the current touch gesture is an accidental touch may be eliminated, and the operation corresponding to the touch behavior is executed, thereby timely responding to the touch gesture of the user and ensuring a good user experience.

In addition, when the operation corresponding to the touch behavior is executed, the operation may be executed on the local terminal, and information about the touch behavior may also be sent to another terminal connected with the local terminal and the operation corresponding to the touch behavior is executed by the other terminal. For example, if the operation corresponding to the touch behavior is photographing with a photographing application program, the photographing application program may be started on the local terminal for photographing, or the information about the touch behavior may be sent to the other terminal connected with the local terminal and then the photographing application program is started on the other terminal for photographing.

In one embodiment, Step 102, as shown in Fig. 2, may be executed by:
Step A1: determining whether a time difference between a first time when the current status information of the terminal is detected and a second time when the current touch gesture is acquired is equal to or smaller than a preset time difference; and
Step A2: when the time difference is equal to or smaller than the preset time difference, determining whether the current status information of the terminal and the current touch gesture correspond to the same touch behavior.

Due to the reasons of software and hardware, the first time and the second time may be different when a detection module detects the current status information of the terminal and the module configured to acquire the touch gesture acquires the current touch gesture. For preventing inaccuracy of a determination result about whether the current status information and the current touch gesture correspond to the same touch behavior, it is better not to determine whether the current status information of the terminal and the current touch gesture correspond to the touch behavior when the first time and the second time are acquired or only when the first time and the second time are the same. Instead, it may be determined whether the time difference between the first time and the second time is smaller than the preset time difference, and then it may be determined whether the current status information of the terminal and the current touch gesture correspond to the same touch behavior when the time difference is smaller than the preset time difference. In such a manner, the phenomenon that the determination result about whether the current status information and the current touch gesture correspond to the same touch behavior is ineffective because the time difference between the first time and the second time is excessively great may be prevented, and the phenomenon that the current status information of the terminal and the current touch gesture are incorrectly determined to be not corresponding to the same touch behavior because the first time is different from the second time for reasons of the software and the hardware may also be avoided.

In one embodiment, in the matching relationship, the motion status information of the terminal comprises at least one of: displacement information of the terminal, and acceleration information of the terminal, and the motion status information of the touch gesture comprises at least one of: displacement information of the touch gesture, and acceleration information of the touch gesture.

The motion status information of the terminal includes the displacement information of the terminal, such as a displacement direction and a displacement magnitude, and may further include the acceleration information, such as an acceleration direction and an acceleration magnitude, wherein the acceleration information may be determined by an acceleration sensor module or a gyroscope. Similarly, the motion status information of the touch gesture may include at least one of: the displacement information about displacement of the touch gesture on the touch screen, such as a displacement direction and a displacement magnitude, and sliding acceleration information, such as an acceleration direction and magnitude.

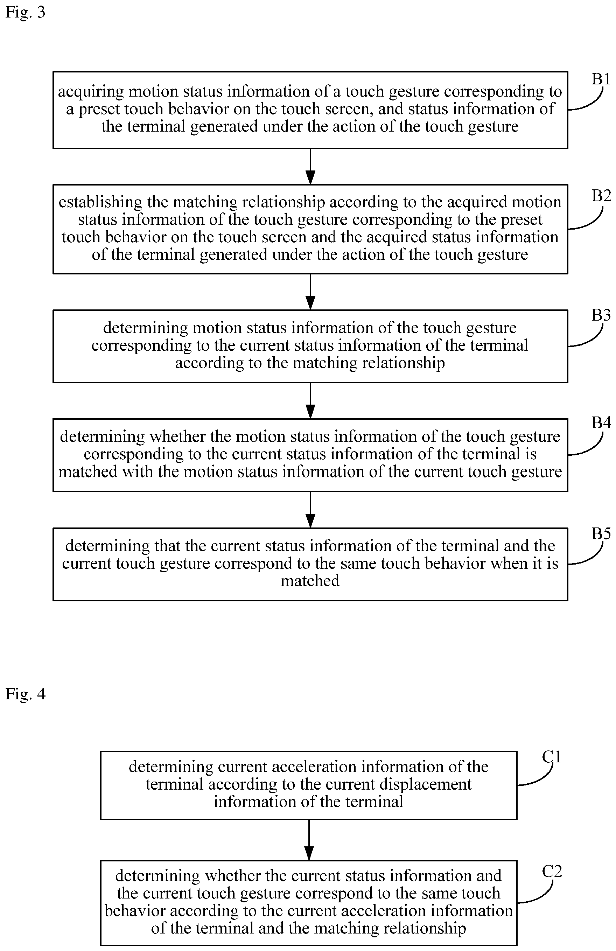

In one embodiment, Step 102, as shown in Fig. 3, may be executed by the following steps.

Step B1 includes acquiring motion status information of a touch gesture corresponding to a preset touch behavior on the touch screen, and status information of the terminal generated under the action of the touch gesture.

Step B2 includes establishing the matching relationship according to the acquired motion status information of the touch gesture corresponding to the preset touch behavior on the touch screen and the acquired status information of the terminal generated under the action of the touch gesture.

Each touch behavior corresponds to a touch gesture, and the touch gesture may not only have certain motion status information (for example the displacement magnitude and direction and acceleration magnitude and direction of a motion of the touch gesture relative to the touch screen when the user performs touch operation on the touch screen to generate the touch gesture) on the touch screen of the terminal, the terminal may also generate status information (for example an angle and displacement magnitude and direction and acceleration magnitude and direction of a motion of the terminal relative to a still reference such as the ground and a desktop) relative to the still reference such as the ground and the desktop, and the two motions correspond to each other, so that the matching relationship may be accurately established after the motion status information of the touch gesture corresponding to the preset touch behavior on the touch screen and the status information of the terminal generated under the action of the touch gesture are acquired.

Step B3 includes determining motion status information of the touch gesture corresponding to the current status information of the terminal according to the matching relationship.

After the current status information of the terminal is detected, the motion status information of the touch gesture corresponding to the current status information may be accurately determined according to the matching relationship.

Alternatively, status information of the terminal corresponding to the current motion status information of the touch gesture may also be determined according to the matching relationship.

Step B4 includes determining whether the motion status information of the touch gesture corresponding to the current status information of the terminal is matched with the motion status information of the current touch gesture.

Alternatively, it may also be determined whether the status information of the terminal corresponding to the current motion status information of the touch gesture is matched with the current status information of the terminal.

Step B5 includes determining that the current status information of the terminal and the current touch gesture correspond to the same touch behavior when it is matched.

Whether the current status information and the current touch gesture correspond to the same touch behavior may be accurately determined according to whether the motion status information of the touch gesture corresponding to the current status information of the terminal is matched with the acquired actual motion status information of the current touch gesture. Specifically, when the motion status information is matched with the actual motion status information, it indicates that the current touch gesture is the touch gesture corresponding to the current status information of the terminal, and it further indicates that the current touch gesture is effective and the current touch gesture and the current status information of the terminal correspond to the same touch behavior.

In one embodiment, the pre-established status information of the terminal corresponding to the same touch behavior may include: an acceleration variable of the terminal in one direction is equal to or more than a first preset variable; or the acceleration variable of the terminal in one direction is equal to or more than a second preset variable and (an) acceleration variable(s) in another direction or multiple other directions is/are equal to or smaller than a third preset variable. In the matching relationship, one direction is matched with a sliding gesture of the corresponding touch gesture, and for example, when the sliding gesture of the corresponding touch gesture is sliding in a direction A, an acceleration variable of the terminal in the direction A is required to be equal to or more than a variable, or an acceleration variable in a direction perpendicular to a horizontal plane where the touch screen is required to be equal to or more than a variable. In one embodiment, one direction may be the direction perpendicular to the horizontal plane where the touch screen is located, or a direction parallel to the horizontal plane where the touch screen is located. One direction may be the direction perpendicular to the horizontal plane where the touch screen is located, for example, an upward or downward direction perpendicular to the horizontal plane, or the direction parallel to the horizontal plane where the touch screen is located, for example, an upward, downward, leftward or rightward direction parallel to the horizontal plane.

For example, when the touch behavior is a screen unlocking behavior, the touch gesture corresponding to the screen unlocking behavior is vertical and downward double-click on the touch screen, motion status information of the vertical and downward double-click gesture includes a downward direction and acceleration magnitude of *a* millimeters/second² of continuous two accelerations within a set time period. Correspondingly, status information, which is generated under the action of the vertical and downward double-click gesture, of the terminal includes a downward direction and acceleration magnitude of b millimeters/second² of continuous two accelerations within the set time period; and a matching relationship may thus be established, and in the matching relationship: the motion status information of the vertical and downward double-click gesture includes the downward direction and acceleration magnitude of *a* millimeters/second² of the continuous two accelerations within the set time period, and the status information of the terminal includes the downward direction and acceleration magnitude of *b* millimeters/second² of the continuous two accelerations within the set time period.

Corresponding to the abovementioned embodiment, in one embodiment, when the current status information of the terminal includes current displacement information of the terminal, Step 102, as shown in Fig. 4, may be executed by:
Step C1: determining current acceleration information of the terminal according to the current displacement information of the terminal; and
Step C2: determining whether the current status information and the current touch gesture correspond to the same touch behavior according to the current acceleration information of the terminal and the matching relationship.

The acceleration information may reflect a motion status of the terminal most directly. Therefore, when the status information is the displacement information of the terminal, the current acceleration information of the terminal may be determined according to the displacement information, and then it may be determined whether the current status information of the terminal and the current touch gesture correspond to the same touch behavior according to the current acceleration information and the pre-established matching relationship.

In another embodiment, when the terminal is handheld by the user, at least one finger of the user may touch the touch screen under a normal condition, and the body of the terminal may form a certain inclination angle with the horizontal plane. At this time, a matching relationship may be established according to experimental data, and in the matching relationship, the status information of the terminal includes: the inclination angle of the body of the terminal relative to the horizontal plane is within a preset angle range, and correspondingly, the motion status information of the corresponding touch gesture includes that a pressing duration of the touch screen reaches a preset time duration. If the current status information of the terminal and the motion status information of the current touch gesture are matched with the matching relationship, it indicates that the terminal is currently handheld by the user, and if the touch screen subsequently receives a touch gesture, operation may be performed according to the accidental touch prevention method provided by the present disclosure.

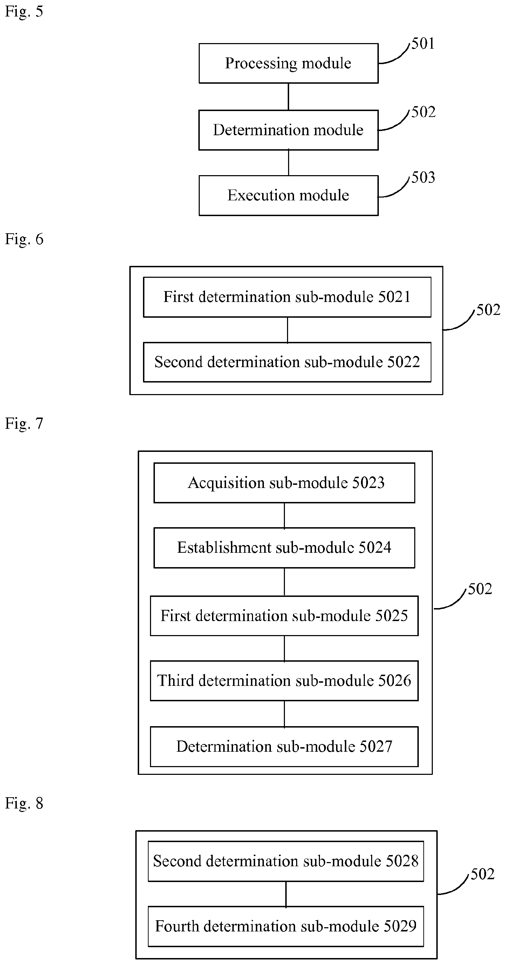

Corresponding to a method for preventing an accidental touch of a terminal with a touch screen, the present disclosure further provides a device for preventing an accidental touch of a terminal with a touch screen. As shown in Fig. 5, the device includes: a processing module 501 configured to detect current status information of the terminal, and acquire a current touch gesture which is acquired by a module configured to acquire a touch gesture, the current status information including posture information or motion status information; a determination module 502 configured to determine, according to a matching relationship pre-established for a touch behavior, whether the current status information of the terminal and the current touch gesture correspond to the same touch behavior, wherein the pre-established matching relationship is a relationship between status information of the terminal and motion status information of a touch gesture; and an execution module 503 configured to, when the current status information of the terminal and the current touch gesture correspond to the same touch behavior, execute an operation corresponding to the touch behavior.

In one embodiment, the determination module 502, as shown in Fig. 6, includes: a first determination sub-module 5021 configured to determine whether a time difference between a first time when the current status information of the terminal is detected and a second time when the current touch gesture is acquired is equal to or smaller than a preset time difference; and a second determination sub-module 5022 configured to, when the time difference is equal to or smaller than the preset time difference, determine whether the current status information of the terminal and the current touch gesture correspond to the same touch behavior.

In one embodiment, the motion status information of the terminal comprises at least one of: displacement information of the terminal, and acceleration information of the terminal; and the motion status information of the touch gesture comprises at least one of: displacement information of the touch gesture, and acceleration information of the touch gesture.

In one embodiment, the determination module 502, as shown in Fig. 7, includes: an acquisition sub-module 5023, configured to acquire motion status information of a touch gesture corresponding to a preset touch behavior on the touch screen, and status information of the terminal generated under the action of the touch gesture; an establishment sub-module 5024, configured to establish the matching relationship according to the acquired motion status information of the touch gesture corresponding to the preset touch behavior on the touch screen and the acquired status information of the terminal generated under the action of the touch gesture; the determination module 502 further includes: a first determination sub-module 5025, configured to determine motion status information of the touch gesture corresponding to the current status information of the terminal according to the matching relationship; a third judgment sub-module 5026, configured to determine whether the motion status information of the touch gesture corresponding to the current status information of the terminal is matched with the motion status information of the current touch gesture; and a determination sub-module 5027, configured to determine that the current status information of the terminal and the current touch gesture correspond to the same touch behavior when it is matched.

In one embodiment, the pre-established status information of the terminal corresponding to the same touch behavior includes: an acceleration variable of the terminal in one direction is equal to or more than a first preset variable; or the acceleration variable of the terminal in one direction is equal to or more than a second preset variable and (an) acceleration variable(s) in another direction or multiple other directions is/are equal to or smaller than a third preset variable.

In one embodiment, the determination module 502, as shown in Fig. 8, includes: a second determination sub-module 5028, configured to determine current acceleration information of the terminal according to the current displacement information of the terminal; and a fourth judgment sub-module 5029, configured to determine whether the current status information and the current touch gesture correspond to the same touch behavior according to the current acceleration information of the terminal and the matching relationship.

In one embodiment, said one direction includes a direction perpendicular to a horizontal plane where the touch screen is located, or a direction parallel to the horizontal plane where the touch screen is located. According to a third aspect of the present disclosure, an accidental touch prevention device for a terminal with a touch screen is provided, which includes: a processor; and a memory configured to store executable instructions of the processor, wherein the processor is configured to: detect current status information of the terminal, and acquire a current touch gesture which is acquired by a module configured to acquire a touch gesture, the current status information including posture information or motion status information; determine, according to a matching relationship pre-established for a touch behavior, whether the current status information of the terminal and the current touch gesture correspond to the same touch behavior, wherein the pre-established matching relationship is a relationship between status information of the terminal and motion status information of a touch gesture; and when the current status information of the terminal and the current touch gesture correspond to the same touch behavior, execute an operation corresponding to the touch behavior.

The processor may be configured as follows: the operation of determining whether the current status information of the terminal and the current touch gesture correspond to the same touch behavior includes: determining whether a time difference between a first time when the current status information of the terminal is detected and a second time when the current touch gesture is acquired is equal to or smaller than a preset time difference; and when the time difference is equal to or smaller than the preset time difference, determining whether the current status information of the terminal and the current touch gesture correspond to the same touch behavior.

The processor may be configured as follows: the motion status information of the terminal comprises at least one of: displacement information of the terminal, and acceleration information of the terminal; and the motion status information of the touch gesture comprises at least one of: displacement information of the touch gesture, and acceleration information of the touch gesture.

The processor may be configured as follows: pre-establishing, for a touch behavior, a matching relationship between status information of the terminal and motion status information of a touch gesture may specifically include: acquiring motion status information of a touch gesture corresponding to a preset touch behavior on the touch screen, and status information of the terminal generated under the action of the touch gesture; establishing the matching relationship according to the acquired motion status information of the touch gesture corresponding to the preset touch behavior on the touch screen and the acquired status information of the terminal generated under the action of the touch gesture; the operation of determining, according to a matching relationship pre-established for a touch behavior, whether the current status information of the terminal and the current touch gesture correspond to the same touch behavior includes: determining motion status information of the touch gesture corresponding to the current status information of the terminal according to the matching relationship; determining whether the motion status information of the touch gesture corresponding to the current status information of the terminal is matched with the motion status information of the current touch gesture; and determining that the current status information of the terminal and the current touch gesture correspond to the same touch behavior when it is matched.

The processor may be configured as follows: the pre-established status information of the terminal corresponding to the same touch behavior comprises: an acceleration variable of the terminal in one direction is equal to or more than a first preset variable; or the acceleration variable of the terminal in one direction is equal to or more than a second preset variable and (an) acceleration variable(s) in another direction or multiple other directions is/are equal to or smaller than a third preset variable.

The processor may be configured as follows: when the current status information of the terminal comprises current displacement information of the terminal, the operation of determining whether the current status information of the terminal and the current touch gesture correspond to the same touch behavior according to the pre-established matching relationship includes: determining current acceleration information of the terminal according to the current displacement information of the terminal; and determining whether the current status information and the current touch gesture correspond to the same touch behavior according to the current acceleration information of the terminal and the matching relationship.

The processor may be configured as follows: said one direction includes a direction perpendicular to a horizontal plane where the touch screen is located, or a direction parallel to the horizontal plane where the touch screen is located.

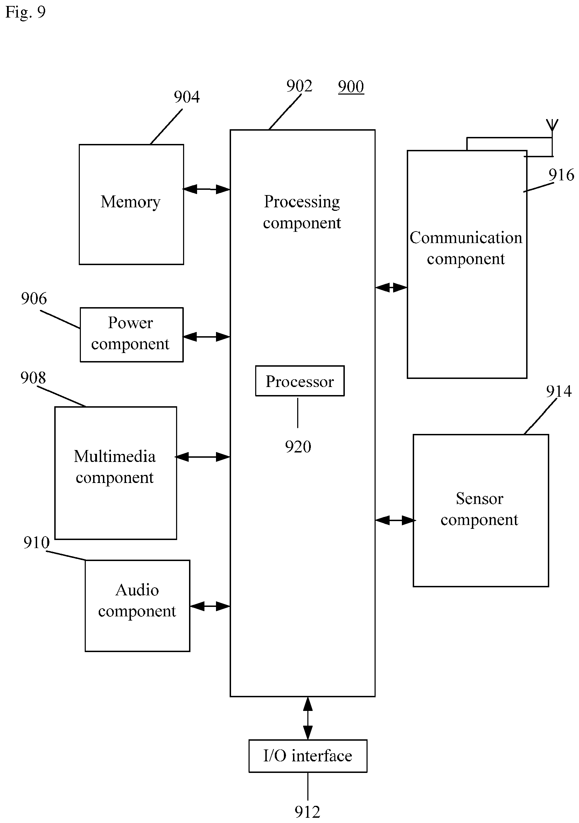

Fig. 9 is a block diagram of an accidental touch prevention device 900 for a terminal with a touch screen, according to an exemplary embodiment. The device is applicable to terminal equipment. For example, the device 900 may be a mobile phone, a computer, a digital broadcast terminal, a messaging device, a gaming console, a tablet, a medical device, exercise equipment, a personal digital assistant and the like.

Referring to Fig. 9, the device 900 may include one or more of the following components: a processing component 902, a memory 904, a power component 906, a multimedia component 908, an audio component 910, an Input/Output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the abovementioned methods. Moreover, the processing component 902 may include one or more modules which facilitate interaction between the processing component 902 and the other components. For instance, the processing component 902 may include a multimedia module to facilitate interaction between the multimedia component 908 and the processing component 902.

The memory 904 is configured to store various types of data to support the operation of the device 900. Examples of such data include instructions for any storage objects or methods operated on the device 900, contact data, phonebook data, messages, pictures, video, etc. The memory 904 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 906 provides power for various components of the device 900. The power component 906 may include a power management system, one or more power supplies, and other components associated with the generation, management and distribution of power for the device 900.

The multimedia component 908 includes a screen providing an output interface between the device 900 and the user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 908 includes a front camera and/or a rear camera. The front camera and/or the rear camera may receive external multimedia data when the device 900 is in an operation mode, such as a photographing mode or a video mode. Each of the front camera and the rear camera may be a fixed optical lens system or have focusing and optical zooming capabilities.

The audio component 910 is configured to output and/or input an audio signal. For example, the audio component 910 includes a microphone (MIC), and the MIC is configured to receive an external audio signal when the device 900 is in the operation mode, such as a call mode, a recording mode and a voice recognition mode. The received audio signal may be further stored in the memory 904 or sent through the communication component 916. In some embodiments, the audio component 910 further includes a speaker configured to output the audio signal.

The I/O interface 912 provides an interface between the processing component 902 and a peripheral interface module, and the peripheral interface module may be a keyboard, a click wheel, a button and the like. The button may include, but not limited to: a home button, a volume button, a starting button and a locking button.

The sensor component 914 includes one or more sensors configured to provide status assessment in various aspects for the device 900. For instance, the sensor component 914 may detect an on/off status of the device 900 and relative positioning of components, such as a display and small keyboard of the device 900, and the sensor component 914 may further detect a change in a position of the device 900 or a component of the device 900, presence or absence of contact between the user and the device 900, orientation or acceleration/deceleration of the device 900 and a change in temperature of the device 900. The sensor component 914 may include a proximity sensor configured to detect presence of an object nearby without any physical contact. The sensor component 914 may also include a light sensor, such as a Complementary Metal Oxide Semiconductor (CMOS) or Charge Coupled Device (CCD) image sensor, configured for use in an imaging application. In some embodiments, the sensor component 914 may also include an acceleration sensor, a gyroscope sensor, a magnetic sensor, a pressure sensor or a temperature sensor.

The communication component 916 is configured to facilitate wired or wireless communication between the device 900 and another device. The device 900 may access a communication-standard-based wireless network, such as a Wireless Fidelity (WiFi) network, a 2nd-Generation (2G) or 3rd-Generation (3G) network or a combination thereof. In an exemplary embodiment, the communication component 916 receives a broadcast signal or broadcast associated information from an external broadcast management system through a broadcast channel. In an exemplary embodiment, the communication component 916 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 900 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned methods.

In an exemplary embodiment, there is also provided a non-transitory computer-readable storage medium including instructions, such as the memory 904 including instructions, and the instructions may be executed by the processor 920 of the device 900 to implement the abovementioned methods. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

According to the non-transitory computer-readable storage medium, when the instructions in the storage medium are executed by the processor of the device 900, the device 900 may execute a method for preventing an accidental touch of a terminal with a touch screen, including the following steps: detecting current status information of the terminal, and acquiring a current touch gesture which is acquired by a module configured to acquire a touch gesture, the current status information comprising posture information or motion status information; determining, according to a matching relationship pre-established for a touch behavior, whether the current status information of the terminal and the current touch gesture correspond to the same touch behavior, wherein the pre-established matching relationship is a relationship between status information of the terminal and motion status information of a touch gesture; and when the current status information of the terminal and the current touch gesture correspond to the same touch behavior, executing an operation corresponding to the touch behavior.

In one embodiment, the step of determining whether the current status information of the terminal and the current touch gesture correspond to the same touch behavior includes: determining whether a time difference between a first time when the current status information of the terminal is detected and a second time when the current touch gesture is acquired is equal to or smaller than a preset time difference; and when the time difference is equal to or smaller than the preset time difference, determining whether the current status information of the terminal and the current touch gesture correspond to the same touch behavior.

In one embodiment, the motion status information of the terminal comprises at least one of: displacement information of the terminal, and acceleration information of the terminal; and the motion status information of the touch gesture comprises at least one of: displacement information of the touch gesture, and acceleration information of the touch gesture.

In one embodiment, pre-establishing, for a touch behavior, a matching relationship between status information of the terminal and motion status information of a touch gesture specifically includes: acquiring motion status information of a touch gesture corresponding to a preset touch behavior on the touch screen, and status information of the terminal generated under the action of the touch gesture; establishing the matching relationship according to the acquired motion status information of the touch gesture corresponding to the preset touch behavior on the touch screen and the acquired status information of the terminal generated under the action of the touch gesture; the step of determining, according to a matching relationship pre-established for a touch behavior, whether the current status information of the terminal and the current touch gesture correspond to the same touch behavior includes: determining motion status information of the touch gesture corresponding to the current status information of the terminal according to the matching relationship; determining whether the motion status information of the touch gesture corresponding to the current status information of the terminal is matched with the motion status information of the current touch gesture; and determining that the current status information of the terminal and the current touch gesture correspond to the same touch behavior when it is matched.

In one embodiment, the pre-established status information of the terminal corresponding to the same touch behavior includes: an acceleration variable of the terminal in one direction is equal to or more than a first preset variable; or the acceleration variable of the terminal in one direction is equal to or more than a second preset variable and (an) acceleration variable(s) in another direction or multiple other directions is/are equal to or smaller than a third preset variable.

In one embodiment, when the current status information of the terminal comprises current displacement information of the terminal, the step of determining whether the current status information of the terminal and the current touch gesture correspond to the same touch behavior according to the pre-established matching relationship includes: determining current acceleration information of the terminal according to the current displacement information of the terminal; and determining whether the current status information and the current touch gesture correspond to the same touch behavior according to the current acceleration information of the terminal and the matching relationship.

In one embodiment, said one direction includes a direction perpendicular to a horizontal plane where the touch screen is located, or a direction parallel to the horizontal plane where the touch screen is located.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with the true scope of the present disclosure being defined by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

### INDUSTRIAL APPLICABILITY

In the technical solutions provided by the present disclosure, according to a matching relationship pre-established for a touch behavior, wherein the pre-established matching relationship is a relationship between status information of the terminal and motion status information of a touch gesture, it may be determined whether the current status information of the terminal and the current touch gesture correspond to the same touch behavior, and it thus may be determined whether the touch gesture is effective. When the touch gesture is effective, an operation corresponding to the touch behavior will be carried out, thereby ensuring perfect user experiences.

## Claims

1. A method for preventing an accidental touch of a terminal with a touch screen, the method comprising:
detecting current status information of the terminal and acquiring a current touch gesture which is acquired by a module configured to acquire a touch gesture, (S101);
determining, according to a matching relationship pre-established for a touch behavior, whether the current status information of the terminal and the current touch gesture correspond to the same touch behavior, wherein the pre-established matching relationship is a relationship between pre-established status information of the terminal and pre-established motion status information of a touch gesture (S102); and
when the current status information of the terminal and the current touch gesture correspond to the same touch behavior, executing an operation corresponding to the touch behavior (S103);
wherein the current status information of the terminal comprises orientation information, and the orientation information is an inclination angle of the terminal;
**characterised in that** the method further comprises, when the detected current status information of the terminal and the current touch gesture do not correspond to the same touch behavior, executing a protection operation that is locking the touch screen of the terminal, or forbidding starting of a preset program in the terminal within a preset time.

2. The method according to claim 1, wherein the step (S102) of determining whether
the current status information of the terminal and the current touch gesture correspond to the same touch behavior comprises:
determining whether a time difference between a first time when the current status information of the terminal is detected and a second time when the current touch gesture is acquired is equal to or smaller than a preset time difference (Al); and
when the time difference is equal to or smaller than the preset time difference, determining whether the current status information of the terminal and the current touch gesture correspond to the same touch behavior (A2).

3. The method according to claim 1 or 2, wherein
the current status information of the terminal further comprises motion status information, wherein the motion status information of the terminal comprises at least one of: displacement information of the terminal, and acceleration information of the terminal; and
the motion status information of the touch gesture comprises at least one of: displacement information of the touch gesture, and acceleration information of the touch gesture.

4. The method according to any one of claims 1 to 3, further comprising pre-establishing, for a touch behavior, the matching relationship between status information of the terminal and motion status information of a touch gesture, the pre-establishing comprising:
acquiring motion status information of a touch gesture corresponding to a preset touch behavior on the touch screen, and acquiring status information of the terminal generated under the action of the touch gesture (B1);
establishing the matching relationship according to the acquired motion status information of the touch gesture corresponding to the preset touch behavior on the touch screen and the acquired status information of the terminal generated under the action of the touch gesture (B2);
wherein the step (S102) of determining, according to the matching relationship pre-established for a touch behavior, whether the current status information of the terminal and the current touch gesture correspond to the same touch behavior comprises:
determining motion status information of the touch gesture corresponding to the current status information of the terminal according to the matching relationship (B3);
determining whether the motion status information of the touch gesture corresponding to the current status information of the terminal is matched with the motion status information of the current touch gesture (B4); and
determining that the current status information of the terminal and the current touch gesture correspond to the same touch behavior when it is matched (B5).

5. The method according to any preceding claim, wherein the current status information of the terminal further comprises motion status information, wherein the pre-established status information of the terminal corresponding to the same touch behavior comprises:
an acceleration variable of the terminal in one direction being equal to or more than a first preset variable; or
an acceleration variable of the terminal in one direction being equal to or more than a second preset variable and an acceleration variable in another direction being equal to or smaller than a third preset variable.

6. The method according to claim 5, wherein when the current status information of the terminal further comprises current displacement information of the terminal, the step of determining (S102) whether the current status information of the terminal and the current touch gesture correspond to the same touch behavior according to the pre-established matching relationship comprises:
determining current acceleration information of the terminal according to the current displacement information of the terminal (C1); and
determining whether the current status information and the current touch gesture correspond to the same touch behavior according to the current acceleration information of the terminal and the matching relationship (C2).

7. A device (900) for preventing an accidental touch of a terminal with a touch screen, comprising:
a processor (920); and
a memory (904) configured to store executable instructions of the processor, which when executed by the processor perform the method of any of claims 1 to 6.

8. A computer program including instructions for executing the steps of a method according to any one of claims 1 to 6 when said program is executed by a computer.

9. A recording medium readable by a computer and having recorded thereon a computer program including instructions that when executed by the computer cause it to carry out the steps of a method according to any one of claims 1 to 6.

## Patentansprüche

1. Verfahren zum Verhindern einer versehentlichen Berührung eines Endgeräts mit einem Berührungsbildschirm, wobei das Verfahren Folgendes umfasst:
Erkennen von aktuellen Statusinformationen des Endgeräts und Erfassen einer aktuellen Berührungsgeste, die von einem zum Erfassen einer Berührungsgeste konfigurierten Modul erfasst wird, (S101);
Bestimmen, gemäß einer für ein Berührungsverhalten vorermittelten Übereinstimmungsbeziehung, ob die aktuellen Statusinformationen des Endgeräts und die aktuelle Berührungsgeste dem gleichen Berührungsverhalten entsprechen, wobei die vorermittelte Übereinstimmungsbeziehung eine Beziehung zwischen vorermittelten Statusinformationen des Endgeräts und vorermittelten Bewegungsstatusinformationen einer Berührungsgeste ist, (S102); und,
wenn die aktuellen Statusinformationen des Endgeräts und die aktuelle Berührungsgeste dem gleichen Berührungsverhalten entsprechen, Ausführen einer dem Berührungsverhalten entsprechenden Operation (S103);
wobei die aktuellen Statusinformationen des Endgeräts Ausrichtungsinformationen umfassen und die Ausrichtungsformationen ein Neigungswinkel des Endgeräts sind;
**dadurch gekennzeichnet, dass** das Verfahren ferner Folgendes umfasst: Ausführen einer Schutzoperation, die den Berührungsbildschirm des Endgeräts sperrt, oder Verbieten des Startens eines vorgegebenen Programms in dem Endgerät innerhalb einer vorgegebenen Zeit, wenn die erkannten aktuellen Statusinformationen des Endgeräts und die aktuelle Berührungsgeste nicht dem gleichen Berührungsverhalten entsprechen.

2. Verfahren nach Anspruch 1, wobei der Schritt (S102) des Bestimmens, ob die aktuellen Statusinformationen des Endgeräts und die aktuelle Berührungsgeste dem gleichen Berührungsverhalten entsprechen, Folgendes umfasst:
Bestimmen, ob eine Zeitdifferenz zwischen einer ersten Zeit, zu der die aktuellen Statusinformationen des Endgeräts erkannt werden, und einer zweiten Zeit, zu der die aktuelle Berührungsgeste erfasst wird, kleiner oder gleich einer vorgegebenen Zeitdifferenz ist, (A1); und,
wenn die Zeitdifferenz kleiner oder gleich der vorgegebenen Zeitdifferenz ist, Bestimmen, ob die aktuellen Statusinformationen des Endgeräts und die aktuelle Berührungsgeste dem gleichen Berührungsverhalten entsprechen, (A2) .

3. Verfahren nach Anspruch 1 oder 2, wobei
die aktuellen Statusinformationen des Endgeräts ferner Bewegungsstatusinformationen umfassen, wobei
die Bewegungsstatusinformationen des Endgeräts wenigsten eines der Folgenden umfassen: Verlagerungsinformationen des Endgeräts und Beschleunigungsinformationen des Endgeräts; und
die Bewegungsstatusinformationen der Berührungsgeste wenigstens eines der Folgenden umfassen:
Verlagerungsinformationen der Berührungsgeste und
Beschleunigungsinformationen der Berührungsgeste.

4. Verfahren nach einem der Ansprüche 1 bis 3, das ferner das Vorherbestimmen der Übereinstimmungsbeziehung zwischen Statusinformationen des Endgeräts und Bewegungsstatusinformationen einer Berührungsgeste für ein Berührungsverhalten umfasst, wobei das Vorherbestimmen Folgendes umfasst:
Erfassen von Bewegungsstatusinformationen einer Berührungsgeste, die einem vorgegebenen Berührungsverhalten auf dem Berührungsbildschirm entspricht, und Erfassen von unter der Aktion der Berührungsgeste erzeugten Statusinformationen des Endgeräts (B1);
Ermitteln der Übereinstimmungsbeziehung gemäß den erfassten Bewegungsstatusinformationen der Berührungsgeste, die dem vorgegebenen Berührungsverhalten auf dem Berührungsbildschirm entspricht, und den erfassten, unter der Aktion der Berührungsgeste erzeugten Statusinformationen des Endgeräts (B2);
wobei der Schritt (S102) des Bestimmens gemäß der für ein Berührungsverhalten vorermittelten Übereinstimmungsbeziehung, ob die aktuellen Statusinformationen des Endgeräts und die aktuelle Berührungsgeste dem gleichen Berührungsverhalten entsprechen, Folgendes umfasst:
Bestimmen von Bewegungsstatusinformationen der Berührungsgeste, die den aktuellen Statusinformationen des Endgeräts entsprechen, gemäß der Übereinstimmungsbeziehung (B3) ;
Bestimmen, ob die Bewegungsstatusinformationen der Berührungsgeste, die den aktuellen Statusinformationen des Endgeräts entsprechen, mit den Bewegungsstatusinformationen der aktuellen Berührungsgeste übereinstimmen, (B4); und
Bestimmen, dass die aktuellen Statusinformationen des Endgeräts und die aktuelle Berührungsgeste dem gleichen Berührungsverhalten entsprechen, wenn sie übereinstimmen (B5).

5. Verfahren nach einem der vorhergehenden Ansprüche, wobei die aktuellen Statusinformationen des Endgeräts ferner Bewegungsstatusinformationen umfassen, wobei die vorermittelten Statusinformationen des Endgeräts, die dem gleichen Berührungsverhalten entsprechen, Folgendes umfassen:
eine Beschleunigungsvariable des Endgeräts in einer Richtung, die größer oder gleich einer ersten vorgegebenen Variable ist; oder
eine Beschleunigungsvariable des Endgeräts in einer Richtung, die größer oder gleich einer zweiten vorgegebenen Variable ist, und eine Beschleunigungsvariable in einer anderen Richtung, die kleiner oder gleich einer dritten vorgegebenen Variable ist.

6. Verfahren nach Anspruch 5, wobei, wenn die aktuellen Statusinformationen des Endgeräts ferner aktuelle Verlagerungsinformationen des Endgeräts umfassen, der Schritt des Bestimmens (S102), ob die aktuellen Statusinformationen des Endgeräts und die aktuelle Berührungsgeste dem gleichen Berührungsverhalten entsprechen, gemäß der vorermittelten Übereinstimmungsbeziehung Folgendes umfasst:
Bestimmen aktueller Beschleunigungsinformationen des Endgeräts gemäß den aktuellen Verlagerungsinformationen des Endgeräts (C1) und
Bestimmen, ob die aktuellen Statusinformationen und die aktuelle Berührungsgeste dem gleichen Berührungsverfahren entsprechen (C2), gemäß den aktuellen Beschleunigungsinformationen des Endgeräts und der Übereinstimmungsbeziehung.

7. Vorrichtung (900) zum Verhindern einer versehentlichen Berührung eines Endgeräts mit einem Berührungsbildschirm, umfassend:
einen Prozessor (920) und
einen Speicher (904), der zum Speichern ausführbarer Anweisungen des Prozessors konfiguriert ist, die bei Ausführung durch den Prozessor das Verfahren nach einem der Ansprüche 1 bis 6 durchführen.

8. Computerprogramm mit Anweisungen zum Ausführen der Schritte eines Verfahrens nach einem der Ansprüche 1 bis 6, wenn das genannte Programm von einem Computer ausgeführt wird.

9. Aufzeichnungsmedium, das von einem Computer lesbar ist und auf dem ein Computerprogramm mit Anweisungen aufgezeichnet ist, die bei Ausführung durch den Computer ihn zum Durchführen der Schritte eines Verfahrens nach einem der Ansprüche 1 bis 6 veranlassen.

## Revendications

1. Procédé de prévention d'un toucher accidentel d'un terminal à écran tactile, le procédé comprenant :
détecter une information d'état courant du terminal et acquérir un geste de toucher courant qui est acquis par un module configuré pour acquérir un geste de toucher, (S101) ;
déterminer, conformément à une relation de concordance préétablie pour un comportement de toucher, si l'information d'état courant du terminal et le geste de toucher courant correspondent au même comportement de toucher, si la relation de concordance préétablie est une relation entre l'information d'état préétabli du terminal et l'information d'état de mouvement préétabli d'un geste de toucher (S102) ; et
lorsque l'information d'état courant du terminal et le geste de toucher courant correspondent au même comportement de toucher, exécuter une opération correspondant au comportement de toucher (S103) ;
dans lequel l'information d'état courant du terminal comprend une information d'orientation, et l'information d'orientation est un angle d'inclinaison du terminal ; **caractérisé en ce que**
le procédé comprend en outre, lorsque l'information d'état courant détecté du terminal et le geste de toucher courant ne correspondent pas au même comportement de toucher, exécuter une opération de protection qui consiste à verrouiller l'écran tactile du terminal, ou à interdire le lancement d'un programme préréglé dans le terminal dans un temps préréglé.

2. Procédé selon la revendication 1, dans lequel l'étape (S102) consistant à déterminer si l'information d'état courant du terminal et le geste de toucher courant correspondent au même comportement de toucher comprend :
déterminer si une différence de temps entre un premier temps lorsque l'information d'état courant du terminal est détectée et un deuxième temps lorsque le geste de toucher courant est acquis, est égale ou inférieure à une différence de temps préréglée (A1) ; et
lorsque la différence de temps est égale ou inférieure à la différence de temps préréglée, déterminer si l'information d'état courant du terminal et le geste de toucher courant correspondent au même comportement de toucher (A2) ;

3. Procédé selon la revendication 1 ou 2, dans lequel
l'information d'état courant du terminal comprend en outre une information d'état de mouvement, dans lequel l'information d'état de mouvement du terminal comprend au moins l'une d'entre : une information de déplacement du terminal, et une information d'accélération du terminal ; et
l'information d'état de mouvement du geste de toucher comprend au moins l'une d'entre : un information de déplacement du geste de toucher, et une information d'accélération du geste de toucher.

4. Procédé selon l'une quelconque des revendications 1 à 3, comprenant en outre préétablir, pour un comportement de toucher, la relation de concordance entre l'information d'état du terminal et l'information d'état de mouvement d'un geste de toucher, le fait de préétablir comprend :
acquérir une information d'état de mouvement d'un geste de toucher correspondant à un comportement de toucher préréglé sur l'écran tactile, et acquérir une information d'état du terminal générée par l'action du geste de toucher (B1) ;
établir la relation de concordance conformément à l'information d'état de mouvement acquise du geste de toucher correspondant au comportement de toucher préréglé sur l'écran tactile et l'information d'état acquise du terminal générée par l'action du geste de toucher (B2) ;
dans lequel l'étape (S102) consistant à déterminer, conformément à la relation de concordance préétablie pour un comportement de toucher, si l'information d'état courant du terminal et le geste de toucher courant correspondent au même comportement de toucher comprend :
déterminer une information d'état de mouvement du geste de toucher correspondant à l'information d'état courant du terminal conformément à la relation de concordance (B3) ;
déterminer si l'information d'état de mouvement du geste de toucher correspondant à l'information d'état courant du terminal concorde avec l'information d'état de mouvement du geste de toucher courant (B4) ;
déterminer si l'information d'état courant du terminal et le geste de toucher courant correspondent au même comportement de toucher lorsqu'elle concorde (B5).

5. Procédé selon l'une quelconque des revendications précédentes, dans lequel l'information d'état courant du terminal comprend en outre une information d'état de mouvement, dans lequel l'information d'état préétabli du terminal correspondant au même comportement de toucher comprend :
une variable d'accélération du terminal dans une direction étant égale ou supérieure à une première variable préréglée ; ou bien
une variable d'accélération du terminal dans une direction étant égale ou supérieure à une deuxième variable préréglée et une variable d'accélération dans une autre direction étant égale ou inférieure à une troisième variable préréglée.

6. Procédé selon la revendication 5, dans lequel lorsque l'information d'état courant du terminal comprend en outre une information de déplacement courant du terminal, l'étape consistant à déterminer (S102) si l'information d'état courant du terminal et le geste de toucher courant correspondent au même comportement de toucher conformément à la relation de concordance préétablie, comprend :
déterminer une information d'accélération courante du terminal conformément à l'information de déplacement courant du terminal (C1) ; et
déterminer si l'information d'état courant et le geste de toucher courant correspondent au même comportement de toucher conformément à l'information d'accélération courante du terminal et à la relation de concordance (C2).

7. Dispositif (900) de prévention d'un toucher accidentel d'un terminal à écran tactile, comprenant :
un processeur (920) ; et
une mémoire (904) configurée pour stocker des instructions exécutables du processeur, qui, lorsque exécutées par le processeur, mettent en œuvre le procédé selon l'une quelconque des revendications 1 à 6.

8. Programme informatique comprenant des instructions pour exécuter les étapes d'un procédé selon l'une quelconque des revendications 1 à 6, lorsque ledit programme est exécuté par un ordinateur.

9. Support de stockage lisible par un ordinateur et ayant enregistré dessus un programme informatique comprenant des instructions qui, lorsque exécutées par l'ordinateur, font qu'il effectue les étapes d'un procédé selon l'une quelconque des revendications 1 à 6.
